# EUROPÄISCHE PATENTSCHRIFT

(11) **EP 1 516 527 B1**
(45) Veröffentlichungstag und Bekanntmachung des Hinweises auf die Patenterteilung: **27.12.2006**
(21) Anmeldenummer: 04104447.0
(22) Anmeldetag: 15.09.2004
(51) Int. Cl.: A01F 15/08

(54) **Ballenpresse, Verbindungsstange und Presskolben**
Baller
Presse à balles

(30) Priorität: 17.09.2003 US 665218
(43) Veröffentlichungstag der Anmeldung: 23.03.2005
(73) Patentinhaber: DEERE & COMPANY, Moline, Illinois 61265-8098 (US)
(72) Erfinder: Roth, Darin Ledru, Ottumwa, IA Iowa 52501 (US)
(74) Vertreter: Magin, Ludwig Bernhard

(56) Entgegenhaltungen:
- EP-A- 0 223 351
- EP-A- 0 655 190
- DE-A- 4 312 991
- US-A- 4 627 341
- US-A- 5 950 410

## Beschreibung

Die Erfindung betrifft eine Ballenpresse mit einer quaderförmigen Presskammer, in der ein Presskolben beweglich aufgenommen wird, mit einer Zufuhröffnung durch welche Gut in die Presskammer gefördert werden kann, um dort durch den Presskolben verdichtet zu werden, mit einem mit dem Presskolben verbundenen Kolbenantrieb mit einem Paar quer beabstandeter, sich zumindest, wenn der Presskolben zumindest im Wesentlichen vollständig in einen Endbereich der Presskammer ausgefahren ist, wenigstens im Wesentlichen horizontal ausgerichteter Verbindungsstangen und einer Sensoreinrichtung zur Ermittlung von auf den Presskolben und/oder den Kolbenantrieb wirkenden Belastungen, mit wenigstens zwei seitlich voneinander beabstandeten mit dem Kolbenantrieb und/oder dem Kolben zusammenwirkenden Sensoren.

Ballenpressen zur Herstellung großer, quaderförmiger Ballen weisen oftmals eine Vorpresskammer in Form eines gebogenen Schachts oder Zufuhrkanals auf, in dem Erntegut angesammelt wird, bis es eine vorbestimmte Dichte erreicht hat, aufgrund deren eine Ladegabeleinrichtung betätigt wird, um eine Portion von Erntegut in eine Presskammer an einer Stelle hinter bzw. an den Presskolben angrenzend in die Presskammer einzubringen. Sobald die Portion von Erntegut in die Presskammer eingebracht wurde, verdichtet der Presskolben das Erntegut gegen bereits vorher verdichtetes Erntegut, das sich bereits in der Presskammer befindet und gegen die Wirkung verstellbarer Seitenwände, welche den Querschnitt der Presskammer einstellen, um die Bewegung des Erntegutes zu begrenzen und um so zu erreichen, dass ein Ballen mit einer vorbestimmten Dichte hergestellt wird. Um sicherzustellen, dass der gebildete Ballen eine gleichförmige Dichte aufweist, ist es bekannt, die Kraft zu messen, welche benötigt wird, um das Erntegut zu verdichten, wobei diese Kraft die Dichte repräsentiert. Da die Dichte der Entegutladung bzw. -portion, die in die Presskammer eingebracht wird, von rechts nach links differieren kann, ist es bekannt, Kraftmessungen auf jeder Seite eines Paares von seitlich beabstandeten Verbindungsstangen durchzuführen, welche sich zwischen einem Antrieb des Presskolbens und dem Presskolben erstrecken. Unter Verwendung der ermittelten Messwerte wird ein Signal erzeugt, um eine Bedienungsperson über eine Notwendigkeit in Kenntnis zu setzten, die Fahrtrichtung der Ballenpresse nach der einen oder anderen Seite bezogen auf einen Erntegutschwad zu verändern, um zu bewirken, dass eine zusätzliche Menge von Erntegut auf der Seite in die Ballenpresse gelangt, auf welcher der niedrigere Messwert der zur Verdichtung notwendigen Kraft ermittelt wurde.

Die US-A-4,627,341, US-A-5,253,570 sowie die EP-B1-0 223 351 zeigen entsprechend ausgebildete Ballenpressen, welche Sensoren aufweisen, die in seitlich beabstandete Verbindungsstangen eines Kolbenantriebs integriert sind, um die auf einen zu bildenden Ballen wirkende Kraft zu messen und Signale zu erzeugen, die in einem Steuersystem Verwendung finden, um eine Bedienungsperson darin zu unterstützen, Ballen gleichmäßiger Dichte zu erzeugen. Die Sensoren sind derart angeordnet, dass sie in einer zentralen, horizontalen Ebene, die sich durch die Verbindungsstangen erstreckt, wenn sich der Presskolben während eines Verdichtungshubs in einer vollständig nach hinten ausgefahrenen Stellung befindet, liegen.

Derartige Ballenpressen unterschiedlicher Größe erfahren Presskolbenbelastungen, die proportional zu dem seitlichen Querschnittsgebiet sind, das zwischen den gegenüberliegenden Seitenwänden der Presskammer angeordnet ist. Wird der Sensor bzw. der Lastmessbolzen zu stark ausgeführt, so geht ein Teil der möglichen Datenauflösung des Sensors verloren. Entsprechend müssen Hersteller von Ballenpressen unterschiedlicher Größe Sensoren bzw. Lastmessbolzen unterschiedlicher Größe bzw. Empfindlichkeit vorhalten, wodurch die Kosten erhöht werden.

Das der Erfindung zu Grunde liegende Problem wird darin gesehen, dass derartigen Ballenpressen zur Herstellung quaderförmiger Ballen häufig keine Ballen optimaler Homogenität erzeugen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Es wird eine Ballenpresse mit einer quaderförmigen Presskammer, in der ein Presskolben beweglich aufgenommen wird, mit einer Zufuhröffnung durch welche Gut in die Presskammer gefördert werden kann, um dort durch den Presskolben verdichtet zu werden, einem mit dem Presskolben verbundenen Kolbenantrieb mit einem Paar quer beabstandeter, sich zumindest, wenn der Presskolben zumindest im Wesentlichen vollständig in einen Endbereich der Presskammer ausgefahren ist, wenigstens im Wesentlichen horizontal ausgerichteter Verbindungsstangen und einer Sensoreinrichtung zur Ermittlung von auf den Presskolben und/oder den Kolbenantrieb wirkenden Belastungen gezeigt. Die Sensoreinrichtung weist wenigstens zwei seitlich voneinander beabstandete mit dem Kolbenantrieb und/oder dem Kolben zusammenwirkende Sensoren auf, die Daten bzw. Werte liefern können, die die Verteilung des Pressgutes in der Presskammer repräsentieren. Aufgrund des seitlichen Abstands der Sensoren können die Werte bzw. Daten Rückschlüsse auf die Verteilung des Pressgutes bezogen auf die Breite der Presskammer erlauben. Da aber einer der Sensoren bezogen auf den anderen Sensor zumindest bei vollständig ausgefahrenem Presskolben vertikal versetzt angeordnet ist, kann die Sensoreinrichtung auch Informationen über die Verteilung des Erntegutes in vertikaler Richtung bzw. bezogen auf die Höhe des Pressraums liefern. Diese Daten bzw. Werte können beispielsweise einer Bedienungsperson bzw. an diese übermittelt werden, so dass sie eine Anpassung von Funktionen oder Parametern der Ballenpresse vornehmen kann, so dass die Ballenpresse einen möglichst homogenen Ballen bildet. Es ist auch möglich, dass aufgrund der Daten und Werte automatisch Funktionen und/oder Parameter der Ballenpresse, beispielsweise mittels einer Steuer- bzw. Regeleinrichtung und/oder unter Zuhilfenahme eines Computers etc., automatisch oder auch halbautomatisch angepasst werden. Beispielsweise ist es denkbar, den Druck bzw. die Dichte des Pressgutes in dem Zufuhrkanal, welche eine Betätigung eines Ladegabelzusammenbaus auslöst, und/oder die Funktion eines Ladegabelzusammenbaus, einer Verdichtergabel und/oder einer Aufnahmeinrichtung, beispielsweise in der Art einer Pick-Up in Abhängigkeit von den ermittelten Werten/Daten zu beeinflussen.

Insbesondere weisen die Verbindungsstangen jeweils eine vorzugsweise durch in ihren Endbereichen angeordnete Verbindungsbolzen bestimmte Längsmittelachsen auf, welche bei zumindest im Wesentlichen ausgefahrenem Presskolben eine zumindest im Wesentlichen horizontale Ebene definieren, die sich zwischen einer oberen und einer unteren Wand der Presskammer erstreckt. Die Sensoren können allgemein vertikal beabstandet bzw. versetzt angeordnet sein, insbesondere sind sie aber bezogen auf diese Längsmittellinien bzw. die Ebene versetzt angeordnet.

Die Sensoren können von jedem beliebigen Sensortyp, insbesondere digitaler oder analoger Bauart, sein. Eine besonders einfache Bauart ergibt sich aber, wenn wenigstens einer der Sensoren in der Art eines Kraft- bzw. Lastmessbolzens ausgebildet ist und/oder einen solchen aufweist.

Ist wenigstens eine der Verbindungsstangen zumindest zweiteilig ausgebildet, können ihre Teilbereiche mittels vertikal beabstandeter Befestigungsmittel verbunden sein, von denen wenigstens eines einen der Sensoren aufweist bzw. als ein solcher, insbesondere als ein Lastmessbolzen, ausgebildet ist.

Ist einer der Teilbereich ein Endbereich der Verbindungsstange, welcher vorzugsweise ein Lager, insbesondere in der Art eines Gelenklagers, aufweist, kann dieses einen Verbindungsbolzen bzw. einen der Verbindungsbolzen aufnehmen, so dass dieser den Endbereich mit dem Presskolben verbindet.

Die Teilbereiche lassen sich besonders einfach verbinden, wenn wenigstens ein Teilbereich eine Feder und der andere Teilbereich wenigstens eine korrespondierende Nut aufweist.

Der Presskolben kann auch ein paar seitlich beabstandeter Platten zur Befestigung der Verbindungsstangen aufweisen, welche lösbar mit dem übrigen Presskolben mittels erster und zweiter vertikal beabstandeter Befestigungsmittel verbunden sind, von denen wenigstens eines den Sensor aufweist und/oder als einer der Sensoren, insbesondere in der Art eines Lastmessbolzens, ausgebildet sein kann.

Diese Platten können dreieckig sein und/oder als ein gleichseitiges Dreieck ausgebildet sein, wobei die ersten und zweiten vertikal beabstandeten Befestigungsmittel in entsprechenden ersten und zweiten Eckbereichen einer jeweiligen Platte angeordnet sind und jede Platte einen dritten Eckbereich aufweist, der mit einem rückwärtigen Endbereich der jeweiligen Verbindungsstange schwenkbar verbunden ist. Es ist aber auch jede andere geeignete Geometrie, insbesondere eine Ausbildung als ein gleichschenkliges Dreieck, denkbar, wobei die Basis des gleichschenkligen Dreiecks vorzugsweise mit dem Presskolben mittels der Befestigungsmittel verbunden ist.

Um die Auswertbarkeit der Daten/Werte zu verbessern, kann es vorgesehen sein, dass die ersten und zweiten Befestigungsmittel vertikal fluchten und einen vorzugsweise gleichen Abstand von der Ebene aufweisen.

Eine Verbindungsstange, die eine vorzugsweise zentrale Längsachse und wenigstens ein erstes und ein zweites Lager, insbesondere in der Art von Gelenklagern, die in gegenüberliegenden Endbereichen der Verbindungsstange angeordnet sind, und einen ersten und eine zweiten Teilbereich aufweist, welche eine Verbindung zwischen den Lagern herstellen, wobei die Teilbereiche durch wenigstens zwei Befestigungsmittel verbunden sind, von denen wenigstens eines ein Sensor, vorzugsweise in der Art eines Lastmessbolzen, ist bzw. durch einen solchen gebildet wird, der bezogen auf die Längsmittelachse und/oder das weitere Befestigungsmittel versetzt angeordnet ist, kann als ein Ersatzteil für einen Kolbenantrieb einer zuvor beschriebenen Ballenpresse dienen oder auch einen bekannten Kolbenantrieb einer üblichen Ballenpresse zur Herstellung quaderförmiger Ballen derart ergänzen bzw. an einem solchen derart nachgerüstet werden, dass eine Sensoreinrichtung der Ballenpresse nicht nur Daten/Werte liefern kann, die eine Verteilung des Erntegutes bezogen auf die Breite der Presskammer sondern auch auf dessen Höhe bzw. vertikaler Erstreckung liefern.

In der Zeichnung sind zwei nachfolgend näher beschriebene Ausführungsbeispiele der Erfindung dargestellt. Es zeigt:
- Fig. 1: eine schematische Ansicht einer Ballenpresse zur Herstellung großer, quaderförmiger Ballen mit einem in einer Presskammer beweglich angeordneten Presskolben,
- Fig. 2: eine vergrößerte, perspektivische Ansicht des Presskolbens und eines Antriebs des Presskolbens mit Sensoren aufweisenden Verbindungsstangen gemäß einer ersten Ausführungsform der Erfindung,
- Fig. 3: eine vergrößerte, perspektivische Ansicht einer der Verbindungsstangen,
- Fig. 4: einen Längsschnitt durch die Verbindungsstange entlang der Linie 4-4 aus Figur 3,
- Fig. 5: eine Seitenansicht eines alternativ ausgeführten Presskolbens, der auf jeder Seite eine dreieckige Platte aufweist, welche mit dem Presskolben und einem Kolbenantrieb mittels Sensoren aufweisenden Befestigungsmitteln verbunden ist und
- Fig. 6: eine Seitenansicht der Platte aus Figur 5 unter Darstellung, der an ihr angreifenden Kräfte.

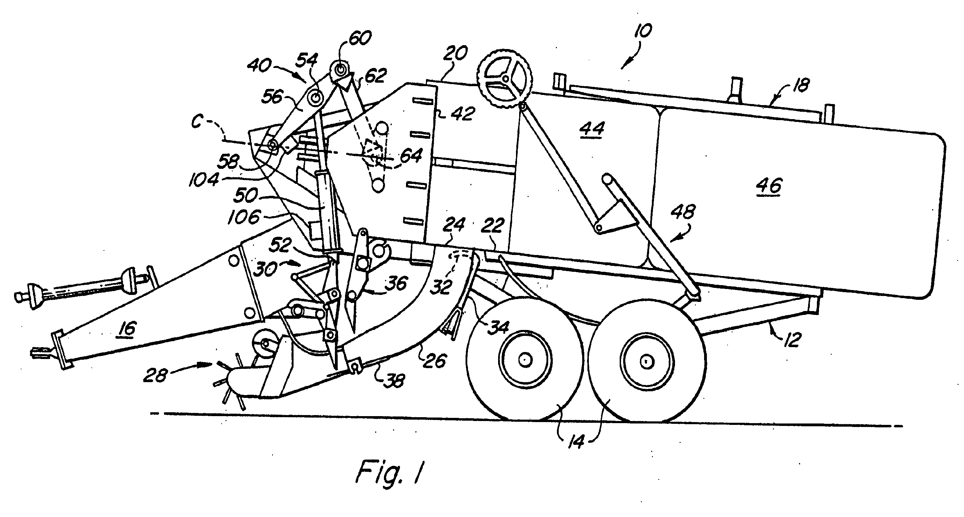

Es wird zuerst auf Figur 1 Bezug genommen, die eine Ballenpresse 10 zur Herstellung großer, quaderförmiger Ballen zeigt, die einen Hauptrahmen 12 aufweist, der sich über Räder 14 auf dem Untergrund abstützt, welche in der Art einer Tandembereifung angeordnet sind. Von einem Frontbereich des Hauptrahmens 12 erstreckt sich eine Deichsel 16 weg, die daran angepasst ist, an ein Zugfahrzeug, wie beispielsweise einen landwirtschaftlichen Ackerschlepper (nicht gezeigt), angeschlossen zu werden. Eine Presskammer 18 weist parallele obere und untere Wände 20 und 22, und gegenüberliegende, parallele Seitenwände auf, welche alle derart angeordnet sind, dass sie einen quadratischen oder rechteckigen Querschnitt bilden. Die untere Wand 22 weist einen Guteinlass 24 auf, welcher mit einem oberen Endbereich einer Vorpresskammer bzw. eines Zufuhrkanals 26 in Form eines nach oben gekrümmten Schachts, der stromaufwärts einer Pick-Up bzw. einer Aufsammeleinrichtung 28 angeordnet ist, verbunden ist. In einem Bereich zwischen der Aufsammeleinrichtung 28 und dem Zufuhrkanal 26 ist ein Verdichtergabelzusammenbau 30 vorgesehen, der derart wirkt, dass er Erntegut in einen vorderen Endbereich des Zufuhrkanals 26 bewegt. Quer beabstandte Zinken 32 einer schwenkbar gelagerten einen Guteintritt blockierenden Gabel 34 sind selektiv zwischen einer gezeigten, Erntegut zurückhaltenden Stellung, in der sie sich über eine obere Kante einer Rückwand des Zufuhrkanals 26 hinaus, an einer Position angrenzend an den Guteinlass 24 erstrecken, und einer nach rückwärts geschwenkten Guteinlassstellung bewegt werden können, in der sie es einer angesammelten Menge an Gut erlauben, durch den Betrieb einer Ladegabel 36 in die Presskammer 18 bewegt zu werden, welche quer beabstandete Gabeln aufweist, welche sich in Schlitzen nach unten bewegen, die in einer Frontwand des Zufuhrkanals 26 vorgesehen sind, und dann durch den Zufuhrkanal 26 nach oben fegen, um die Gutmenge bzw. -portion in die Presskammer 18 zu bewegen. Der Gabel 34 und der Ladegabel 36 sind passende Betätigungsmittel (nicht gezeigt) zugeordnet, welche mit Steuermitteln zusammenwirken, welche getaktet sind, um ein Zurückziehen der Gabel 34 und im Anschluss eine Betätigung der Ladegabel 36 bewirken, sobald die Gutmenge bzw. -ladung eine vorgewählte Dichte erreicht hat, welche durch eine Sensoreinrichtung 38 in der Art einer federbelasteten Klappe ermittelt wird.

Sobald die Gutportion in die Presskammer 18 gefördert wurde, wird sie durch den Betrieb eines auf einen Presskolben 42 wirkenden Kolbenantriebs 40 nach rückwärts bewegt, der die Gutportion gegen einen teilweise geformten Ballen 44 und einen vollständig geformten Ballen 46 verdichtet, der bereits durch mehrere, quer beabstandte Garnschlaufen gebunden wurde, welche durch den Betrieb einer Garnbindeeinrichtung 48 platziert wurden, von der nur ein Nadeljoch 38 gezeigt ist, welche schwenkbar befestigt ist, um Garn durch die Ballenkammer 18 zu bewegen, wenn der Ballen 44 eine vorgegebene Länge erreicht.

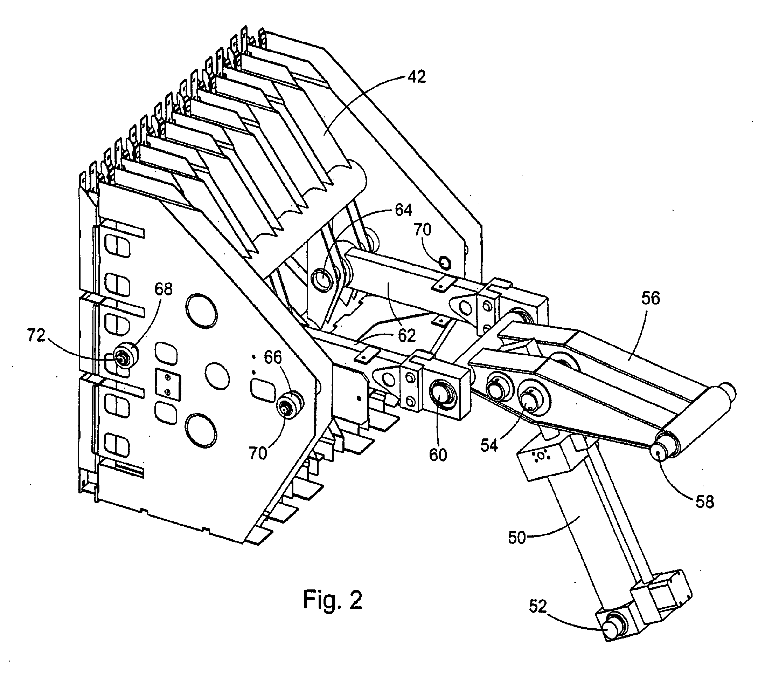

Es wird nun auch auf Figur 2 Bezug genommen, die den Kolbenantrieb 40 zeigt, der einen aus- und einfahrbaren Hydraulikmotor 50 aufweist, dessen Zylinderendbereich an dem Rahmen 12 mittels eines Verbindungsbolzens 52 verankert ist, und dessen Kolbenendbereich schwenkbar mittels eines Bolzens 54 mit einem Kurbelarm 56 verbunden ist. Der Kurbelarm 56 ist derart befestigt, dass er um eine horizontale Querachse oszillieren kann, welche durch einen Bolzen 58 bestimmt wird, der einen vorderen Endbereich des Kurbelarms 56 mit dem Hauptrahmen 12 verbindet. Ein rückwärtiger Endbereich 56 des Kurbelarms 56 ist schwenkbar, beispielsweise mittels eines Verbindungsbolzens 60, an einem vorderen Endbereich eines parallelen Paares seitlich beabstandeter Pleuelstangen bzw. Verbindungsstangen 62 verbunden, deren rückwärtige Endbereiche schwenkbar mit dem Presskolben 42 mittels entsprechender Verbindungsbolzen 64 verbunden sind. Der Hydraulikmotor 50 wird in Figur 2 in seiner eingefahrenen Stellung gezeigt, die mit der Stellung korrespondiert, welche er einnimmt, wenn der Presskolben 42 in der Presskammer 18 vollständig nach hinten ausgefahren ist. Eine Bewegung des Presskolbens 42 zwischen seiner vollständig eingefahrenen Stellung, welche in Figur 1 gezeigt ist, und seiner vollständig ausgefahrenen Stellung wird durch ein vorderes und ein rückwärtiges Paar von Rollen 66 und 68 geführt, welche entsprechend um vordere und rückwärtige Paare von Lagerbolzen 70 und 72 drehbar gelagert sind, welche an gegenüberliegenden Seitenwänden des Presskolbens 42 befestigt sind. Es ist wesentlich zu bemerken, dass sich eine Verbindungslinie C' zwischen den Mittelpunkten der Verbindungsbolzen 60, 64 jeder Verbindungstangen 62 erstreckt.

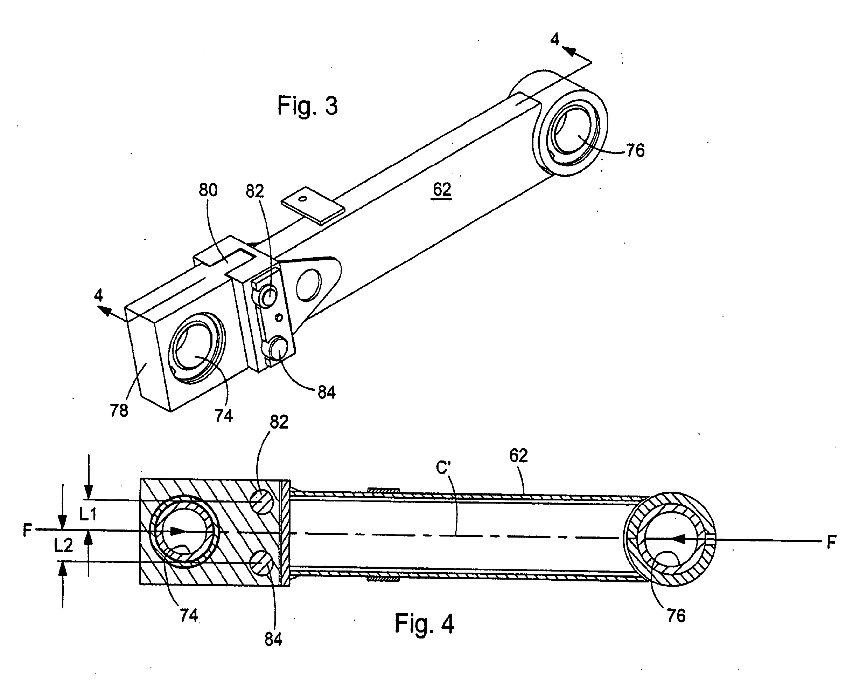

Es wird nun auch auf die Figuren 3 und 4 Bezug genommen, denen entnommen werden kann, dass vordere und rückwärtige Endbereich jeder der Verbindungsstangen 62 entsprechen mit Querbohrungen versehen sind, in welchen identische, vordere und hintere Pendelkugellager bzw. Gelenklager mit einer Verbindungslinie, welche im Folgenden als Lager 74 und 76 bezeichnet werden, angeordnet sind. Jede Verbindungsstange 62 weist einen separaten vorderen Endbereich 78 auf, der durch ein Profil mit rechteckigem Querschnitt bestimmt wird, in welchem eine Bohrung bzw. Aussparung angeordnet ist, welche das vordere Lager 74 umfasst. Der vordere Endbereich 78 weist eine Zunge bzw. Feder 80 geringerer Breite auf, welche zwischen gegenüberliegenden Seiten eines gegabelten vorderen Endbereichs des verbleibenden Bereichs der Verbindungsstange 62 angeordnet ist. Der Endbereich 78 wird durch ein als Lastmessbolzen bzw. Sensor ausgeführtes erstes Befestigungsmittel 82 und einen weiteren Bolzen bzw. ein weiteres Befestigungsmittel 84 lagegesichert, wobei das erste Befestigungsmittel 82 und das zweite Befestigungsmittel 84 entsprechend von der Verbindungslinie C' nach oben und unten beabstandet sind.

Es wird nun auf Figur 4 Bezug genommen, die eine Lastanalyse einer der Verbindungsstangen 62 zeigt. Da die Lager 74 und 76 an jedem Endbereich der Verbindungsstange 62 vorgesehen sind, wird die Verbindungsstange 62 keine Biegebelastungen, sondern nur Druckbelastungen F erfahren. Der Belastungspfad wird sich immer durch das Zentrum jeder Rolle der Lager 74 und 76 erstrecken. Der Abstand des Belastungspfades von dem Sensor bzw. dem ersten Befestigungsmittel 82 ist L1, während der Abstand zwischen dem zweiten Befestigungsmittel 84 und dem Belastungspfad L2 ist. Entsprechend wird das Verhältnis (L1/L2) des Abstands zwischen dem Belastungspfad und dem ersten Befestigungsmittel 82 bzw. dem zweiten Befestigungsmittel 84, die in dem ersten Befestigungsmittel 82 bzw. dem zweiten Befestigungsmittel 84 auftretende Kraft bestimmten. Wenn L1 größer ist als L2, wird die Kraft in dem ersten Befestigungsmittel 82 geringer sein, und ist L1 kleiner als L2, ist die Kraft in dem ersten Befestigungsmittel 82 größer. Entsprechend kann die Verbindungsstange 62 derart ausgebildet sein, dass sie das gesamte Belastungsspektrum eines bereits verfügbaren Sensors benutzen kann, wodurch die elektronische Empfindlichkeit des als Sensor ausgebildeten Befestigungsmittels 82 maximiert wird.

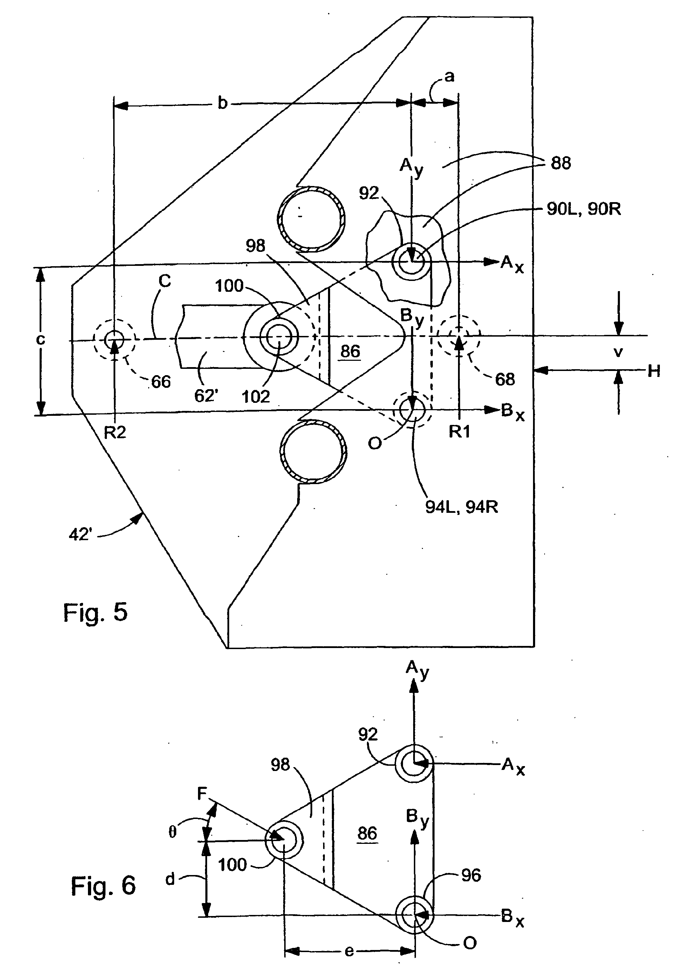

Mit Bezug auf Figur 5 wird eine zweite Ausführungsform der Erfindung dargestellt. Im Besonderen wird ein Presskolben 42' gezeigt, welcher linke und rechte, identische, seitlich beabstandte Platten aufweist, von denen nur die linke Platte 86 sichtbar ist. Die Platte 86 ist hier in der Art eines gleichwinkligen Dreiecks ausgebildet, wobei zwei Ecken vertikal miteinander fluchten und vertikal gleich beabstandet auf gegenüberliegenden Seiten einer zentralen Ebene C angeordnet sind, und wobei die verbleibende Ecke vor den anderen Ecken und zentral auf der Ebene C angeordnet ist. Die rechten und linken dreieckigen Platten 86 werden entsprechend von rechten und linken Paaren plattenartiger, vertikaler Verstärkungsrippen des Presskolben 42' aufgenommen, von denen nur das linke Paar von Rippen 88 sichtbar ist. Ein erstes als Lastmessbolzen bzw. Sensor ausgebildetes Befestigungsmittel 90L erstreckt sich durch fluchtende Aussparungen in dem Paar von Rippen 88 und einem Lager 92, welches in einem oberen, rückwärtigen Eckbereich der dreieckigen Platte 86 angeordnet ist. Es soll deutlich werden, dass ein weiteres als Kraftmessbolzen bzw. Sensor ausgebildetes Befestigungsmittel 90R (nicht sichtbar) gleichermaßen vorgesehen ist, um den oberen, rückwärtigen Eckbereich der rechten dreieckigen Platte an dem rechten Paar plattenartiger Verstärkungsrippen des Presskolbens 42' zu sichern. In gleicher Weise erstreckt sich ein linker Bolzen bzw. ein Befestigungsmittel 94L durch fluchtende Aussparungen in dem Paar von Rippen 88 und ein Lager 96 in einem unteren, rückwärtigen Eckbereich der dreieckigen Platte 86. Entsprechend erstreckt sich ein rechtes Befestigungsmittel 94R (nicht gezeigt) durch fluchtende Aussparungen in dem rechten Paar Verstärkungsrippen und ein Lager, dass einen unteren, rückwärtigen Eckbereich der rechten dreieckigen Platte bestimmt. Die rückwärtigen Endbereiche eines Paars von Verbindungsstangen 62' sind entsprechend mit den vorderen Ecken bzw. Eckbereichen der rechten und der linken dreieckigen Platte verbunden, wobei nur die Verbindung der linken Verbindungsstange 62' mit der linken Platte 86 gezeigt wird. Genauer ist ein vorderer Bereich der dreieckigen Platte 86 gegabelt, um so einen vorderen Eckbereich zu bestimmen, der parallele, seitlich beabstandete Seiten 98 aufweist, die mit einem Lager 100 versehen sind, wobei die Lager 100 zusammenwirken, um die vorderen Eckbereiche der Platte 86 zu bestimmen. Der rückwärtige Endbereich der linken Verbindungsstange 62' wird zwischen beabstandeten Seiten 98 des vorderen Bereichs der Platte 86 aufgenommen, und an dieser durch einen Bolzen 102, welcher in der Ebene C zentriert ist gesichert. Die Verbindungsstangen 62' nehmen die Lager 74 und 76 entsprechend in ihren vorderen und rückwärtigen Endbereichen auf.

Es wird hier angemerkt, dass es unwesentlich ist, ob oder ob nicht die Platten, die die Verbindungsstangen mit dem Presskolben 42 verbinden dreieckig sind. Was aber wesentlich ist, ist die Anordnung der Sensoren bzw. der Befestigungsmittel, da die Lastberechung einfacher ist, wenn diese Anordnung dem gezeigten dreieckigen Design ähnlich ist. Wie die Pleuel- bzw. Verbindungsstangen 62 der ersten Ausführungsform sind die vorderen Endbereich der Verbindungsstangen 62' schwenkbar mit den rückwärtigen Endbereichen des Kurbelarms 56 über Bolzen 60 verbunden.

Es wird nun auf Figur 6 Bezug genommen, in der die linke, dreieckige Platte 86 dargestellt wird, wobei die auf diese während eines Verdichtungshubs wirkenden Belastungen gezeigt werden, wobei es deutlich werden soll, dass gleiche Belastungen auf die rechte, dreieckige Platte ausgeübt werden.

Die folgende Berechung zeigt zusammen mit den zerlegten Kräften in den Figuren 5 und 6 ein Konzept zur Bestimmung nebeneinander liegender als auch vertikal versetzter Belastungen auf den Presskolben einer Ballenpresse unter Verwendung von nur zwei Kraftmessbolzen bzw. Sensoren. Es sind vier Sensoren vorgesehen, nämlich ein Kurbelwinkelsensor 104, der die Stellung des Presskolbens 42 als eine Funktion der Winkelbeziehung zwischen dem Kurbelarm 56 und der zentralen Ebene C ermittelt, ein Zylinderdrucksensor 106, der mit dem Hydraulikmotor 50 verbunden ist, und entsprechend ein rechtes und ein linkes als Kraftmessbolzen bzw. Sensor ausgebildetes Befestigungsmittel 90R und 90L. Die Information über einen Versatz der Belastung nach oben und unten kann verwendet werden, um die Geschwindigkeit und/oder den Hub der Ladegabel wie auch den Druck in dem Zufuhrkanal einzustellen. Alle diese Maschineneinstellungen können verwendet werden, um eine gleichmäßigere Erntegutportion und somit einen gleichmäßigeren Ballen zu erzeugen.

Im Folgenden sind die verschiednen Bezeichnungen angeführt, welche in der Berechung verwendet werden:
F = Verbindungsstangenkraft
H = Reaktionskraft entgegen der Presskolbenbewegung
a = Abstand zwischen dem Sensor und der rückwärtigen Rollen in Längsrichtung
b = Abstand zwischen dem Sensor und der vorderen Rolle in Längsrichtung
c = vertikaler Abstand zwischen den Befestigungsmitteln
d = vertikaler Abstand zwischen den Befestigungsmitteln und dem die dreieckigen Platten und den Presskolben verbindenden Bolzen
e = horizontaler Abstand zwischen den Befestigungsmitteln und dem die dreieckigen Platten und den Presskolben verbindenden Bolzen
Axl = linke Reaktionskraft am Punkt A in Längsrichtung
Axr = rechte Reaktionskraft am Punkt A in Längsrichtung
θ = Kurbelwinkel
R21 = Reaktionskraft auf das vordere Gelenklager bzw. Lager auf der linken Presskolbenseite
R2r = Reaktionskraft auf das vordere Gelenklager bzw. Lager auf der rechten Presskolbenseite

Die Berechung erfolgt dann wie folgt:
H = F( cos θ), wobei F durch den Drucksensor 106, der mit dem Hydraulikmotor 50 verbunden ist, und θ durch den Kurbelwinkelsensor 104 bekannt ist. Für den Zweck der folgenden Berechnung ist es der Fall, dass a= 0 ist, was aber nicht zwangsläufig zutreffen muss. Darüber hinaus wird angenommen, dass der Presskolben 42' und die dreieckigen Platten 86 absolut steif sind und keine Rotations- oder Translationsbeschleunigung erfahren. Wie es in Figur 5 dargestellt ist, muss die Summe der Momente um den Punkt O an dem Presskolben 42' 0 sein. Somit ist Axl(c) + Axr(c8) + R21(b) + R2r(b) = -H(c/2-v), wobei zu beachten ist, dass das vordere und hintere Paar von Rollen 66 und 68 jedes Moment ausgleicht, welches auf den Presskolben durch einen Versatz an Belastung nach oben und unten wirkt. Das Ziel ist es, die Summe der Momente um den Punkt O auf der Platte 86 zu ermitteln. Wenn die Gleichung auf Figur 6 angewendet wird, ergibt sich: F(cos θ) (d) - f(sin θ) (e) = Axl(c) + Acr(c) wobei Axl und Axr tatsächliche von den Kraftmessbolzen ermittelte Werte sind. Seitlich oder Links/Rechts versetzte Belastungen sind einfach mittels der folgenden Gleichung zu berechnen: Links/Rechts Versatz= Axl - Axr/ (Axl + Axr). Ein vertikaler oder Oben/Unten - Belastungsversatz ergibt sich aus der Differenz zwischen der erwarteten Ax Sensorbolzenbelastung und den tatsächlich von dem Sensor ermittelten Werten. Im Besonderen beträgt der Oben/Unten Versatz = [F (cos θ) - Axl - Axr]/F (cos θ). Ein positiver Wert zeigt, dass die Reaktionskraft H, die einer Presskolbenbewegung widersteht, unterhalb des Zentrum liegt, während ein negativer Wert anzeigt, dass die Kraft H oberhalb des Presskolbenzentrums wirkt.

Somit wird es deutlich geworden sein, dass die Presskolben /Verbindungsstange/Platten-Anordnung der zweiten Ausführungsform die gleiche Fähigkeit zur Ermittlung seitlicher Lastdifferenz eines Presskolbens aufweist, wie die Presskolben/Verbindungsstangen-Anordnung gemäß der ersten Ausführungsform und darüber hinaus die Fähigkeit aufweist, eine Lastdifferenz von Oben nach Unten zu ermitteln.

Nach der Beschreibung der bevorzugten Ausführungsform wird es deutlich werden, dass verschiedene Veränderungen durchgeführt werden können, ohne von dem Schutzbereich der Erfindung, wie er durch die Ansprüche bestimmt wird, abzuweichen.

## Patentansprüche

1. Ballenpresse (10) mit einer quaderförmigen Presskammer (18), in der ein Presskolben (42, 42') beweglich aufgenommen wird, mit einer Zufuhröffnung (24) durch welche Gut in die Presskammer (18) gefördert werden kann, um dort durch den Presskolben (42, 42') verdichtet zu werden, mit einem mit dem Presskolben (42, 42') verbundenen Kolbenantrieb (40) mit einem Paar quer beabstandeter, sich zumindest, wenn der Presskolben (42, 42') zumindest im Wesentlichen vollständig in einen Endbereich der Presskammer (18) ausgefahren ist, wenigstens im Wesentlichen horizontal ausgerichteter Verbindungsstangen (62, 62') und einer Sensoreinrichtung zur Ermittlung von auf den Presskolben (42, 42') und/oder den Kolbenantrieb (40) wirkenden Belastungen, mit wenigstens zwei seitlich voneinander beabstandeten mit dem Kolbenantrieb (40) und/oder dem Presskolben (42) zusammenwirkenden Sensoren, **dadurch gekennzeichnet dass** einer der Sensoren bezogen auf den anderen Sensor zumindest bei vollständig ausgefahrenem Presskolben (18) vertikal versetzt angeordnet ist.

2. Ballenpresse nach Anspruch 1, **dadurch gekennzeichnet, dass** die Verbindungsstangen (62, 62') jeweils eine vorzugsweise durch in ihren Endbereichen angeordnete Verbindungsbolzen (60, 64) bestimmte Längsmittelachsen (C') aufweisen, welche bei zumindest im Wesentlichen ausgefahrenem Presskolben (18) eine zumindest im Wesentlichen horizontale Ebene (C) definieren, die sich zwischen einer oberen und einer unteren Wand (20, 22) der Presskammer (18) erstreckt, und dass die Sensoren bezogen auf die Längsmittellinien bzw. die Ebene (C) versetzt angeordnet sind

3. Ballenpresse nach Anspruch 1 oder 2, **dadurch gekennzeichnet, dass** wenigstens einer der Sensoren in der Art eines Kraftmessbolzens ausgebildet ist und/oder einen solchen aufweist.

4. Ballenpresse nach einem oder mehreren der vorherigen Ansprüche, **dadurch gekennzeichnet, dass** wenigstens eine der Verbindungsstangen (62, 62') zweiteilig ausgebildet und ihre Teilbereiche mittels vertikal beabstandeter Befestigungsmittel (82, 84) verbunden sind, wobei wenigstens eines der Befestigungsmittel (82, 84) vorzugsweise einen der Sensoren aufweist bzw. als ein solcher ausgebildet ist.

5. Ballenpresse nach Anspruch 4, **dadurch gekennzeichnet, dass** einer der Teilbereich ein Endbereich (78) der Verbindungsstange (62) ist, welcher vorzugsweise ein Lager (74, 76), insbesondere in der Art eines Gelenklagers aufweist, das einen bzw. einen der Verbindungsbolzen (64) aufnehmen kann, der den Endbereich (78) mit dem Presskolben (42) verbindet.

6. Ballenpresse nach Anspruch 4 oder 5, **dadurch gekennzeichnet, dass** wenigstens einer der Teilbereiche wenigstens eine Feder (80) und der andere Teilbereich wenigstens eine korrespondierende Nut aufweist.

7. Ballenpresse nach einem oder mehreren der Ansprüche 1 bis 3, **dadurch gekennzeichnet, dass** der Presskolben (42') ein paar seitlich beabstandeter Platten (86) zur Befestigung der Verbindungsstangen (62, 62') aufweist, welche lösbar mit dem übrigen Presskolben (42') mittels erster und zweiter vertikal beabstandeter Befestigungsmittel (90, 94) verbunden sind, und wobei wenigstens eines der Befestigungsmittel (90, 94) einen der Sensoren aufweist und/oder als einer der Sensoren ausgebildet ist.

8. Ballenpresse nach Anspruch 7, **dadurch gekennzeichnet, dass** die Platten (86) dreieckig sind und/oder ein gleichseitiges Dreieck bilden, wobei die ersten und zweiten vertikal beabstandeten Befestigungsmittel (90, 94) in entsprechenden ersten und zweiten Eckbereichen einer jeweiligen Platte (86) angeordnet sind und jede Platte (86) einen dritten Eckbereich aufweist, der mit einem rückwärtigen Endbereich (78) der jeweiligen Verbindungsstange (62, 62') schwenkbar verbunden ist.

9. Ballenpresse nach Anspruch 8, **dadurch gekennzeichnet, dass** die ersten und zweiten Befestigungsmittel (90, 94) vertikal fluchten und einen vorzugsweise gleichen Abstand von der Ebene (C) aufweisen.

## Claims

1. Baler (10) with a parallelepipedal baling chamber (18), in which a plunger (42, 42') is movably received, with a feed inlet (24), through which crop can be conveyed into the baling chamber (18) to be compressed there by the plunger (42, 42'), with a plunger drive (40) connected to the plunger (42, 42') with a pair of transversely spaced links (62, 62'), which are oriented at least substantially horizontally at least when the plunger (42, 42') is extended at least substantially completely into an end region of the baling chamber (18), and a sensor assembly to detect loads acting on the plunger (42, 42') and/or the plunger drive (40), with at least two laterally spaced sensors cooperating with the plunger drive (40) and/or the plunger (42), **characterised in that** one of the sensors is arranged vertically offset relative to the other sensor at least when the plunger (18) is fully extended.

2. Baler according to Claim 1, **characterised in that** the links (62, 62') respectively have a longitudinal central axis (C'), which is preferably determined by connection pins (60, 64) arranged in their end regions, and when the plunger (18) is extended at least substantially said axes define an at least substantially horizontal plane (C), which extends between an upper and a lower wall (20, 22) of the baling chamber (18), and that the sensors are arranged offset relative to the longitudinal central lines or the plane (C).

3. Baler according to Claim 1 or 2, **characterised in that** at least one of the sensors is configured in the manner of a load-sensing pin and/or has such a pin.

4. Baler according to one or more of the preceding claims, **characterised in that** at least one of the links (62, 62') is configured in two parts and its component sections are connected by means of vertically spaced fastening elements (82, 84), wherein at least one of the fastening elements (82, 84) preferably has one of the sensors or is configured as such.

5. Baler according to Claim 4, **characterised in that** one of the component sections is an end region (78) of the link (62), which preferably has a bearing (74, 76), in particular in the manner of a pivot bearing, which can receive one or one of the connecting pins (64), which connects the end region (78) to the plunger (42).

6. Baler according to Claim 4 or 5, **characterised in that** at least one of the component sections has at least one tongue (80) and the other component section has at least a corresponding groove.

7. Baler according to one or more of Claims 1 to 3, **characterised in that** the plunger (42') has a pair of laterally spaced plates (86) for fastening the links (62, 62'), which are detachably connected to the rest of the plunger (42') by means of first and second vertically spaced fastening elements (90, 94), and wherein at least one of the fastening elements (90, 94) has one of the sensors and/or is configured as one of the sensors.

8. Baler according to Claim 7, **characterised in that** the plates (86) are triangular and/or for an equilateral triangle, wherein the first and second vertically spaced fastening elements (90, 94) are arranged in corresponding first and second corner regions of a respective plate (86), and each plate (86) has a third corner region, which is connected to pivot to a rearward end region (78) of the respective link (62, 62').

9. Baler according to Claim 8, **characterised in that** the first and second fastening elements (90, 94) are aligned vertically and are preferably spaced at equal distance from the plane (C).

## Revendications

1. Presse à balles (10) comportant une chambre de formation de balles (18) parallélépipédique, dans laquelle est logé un piston de compactage (42, 42') mobile, une ouverture d'admission (24), par laquelle la matière peut être acheminée à l'intérieur de la chambre de formation de balles (18) afin d'y être compactée par le piston de compactage (42, 42'), un système d'entraînement du piston (40), relié au piston de compactage (42, 42') et comportant une paire de tiges de liaison (62, 62'), écartées transversalement l'une de l'autre et orientées au moins sensiblement horizontalement au moins lorsque le piston de compactage (42, 42') est extrait au moins sensiblement complètement dans une zone d'extrémité de la chambre de formation de balles (18), et un système de capteurs destiné à déterminer les sollicitations exercées sur le piston de compactage (42, 42') et/ou le système d'entraînement du piston (40) et comportant au moins deux capteurs écartés latéralement l'un de l'autre et coopérant avec le système d'entraînement du piston (40) et/ou le piston de compactage (42), **caractérisée en ce que** l'un des capteurs est agencé en étant décalé verticalement par rapport à l'autre capteur au moins lorsque le piston de compactage (42) est complètement extrait.

2. Presse à balles selon la revendication 1, **caractérisée en ce que** les tiges de liaison (62, 62') comportent chacune un axe médian longitudinal (C'), déterminé de préférence par des boulons d'assemblage (60, 64) disposés dans leurs zones d'extrémité, lesquels axes, au moins lorsque le piston de compactage (42) est sensiblement complètement extrait, définissent un plan (C) au moins sensiblement horizontal, qui s'étend entre une paroi supérieure (20) et une paroi inférieure (22) de la chambre de formation de balles (18), et **en ce que** les capteurs sont agencés en étant décalés par rapport aux lignes médianes longitudinales ou par rapport au plan (C).

3. Presse à balles selon la revendication 1 ou 2, **caractérisée en ce qu'**au moins un des capteurs est réalisé sous forme de boulon dynamométrique et/ou comporte un tel boulon.

4. Presse à balles selon une ou plusieurs des revendications précédentes, **caractérisée en ce qu'**au moins une des tiges de liaison (62, 62') est réalisée en deux parties et ses zones partielles sont reliées par des moyens de fixation (82, 84) écartés verticalement, au moins l'un des moyens de fixation (82, 84) comportant de préférence l'un des capteurs ou étant réalisé sous la forme de l'un des capteurs.

5. Presse à balles selon la revendication 4, **caractérisée en ce que** l'une des zones partielles est une zone d'extrémité (78) de la tige de liaison (62), qui comporte de préférence un palier (74, 76), en particulier sous la forme d'un palier articulé, qui peut recevoir un ou l'un des boulons dynamométriques (64), par lequel la zone d'extrémité (78) est reliée au piston de compactage (42).

6. Presse à balles selon la revendication 4 ou 5, **caractérisée en ce qu'**au moins l'une des zones partielles comporte au moins une languette (80) et l'autre zone partielle comporte au moins une rainure correspondante.

7. Presse à balles selon une ou plusieurs des revendications 1 à 3, **caractérisée en ce que** le piston de compactage (42') comporte une paire de plaques (86), qui sont écartées latéralement l'une de l'autre pour la fixation des tiges de liaison (62, 62') et qui sont assemblées de manière amovible avec l'autre piston de compactage (42') par des premiers et des deuxièmes moyens de fixation (90, 94), écartés verticalement l'un de l'autre, et au moins l'un des moyens de fixation (90, 94) comportant l'un des capteurs et/ou étant réalisé sous la forme de l'un des capteurs.

8. Presse à balles selon la revendication 7, **caractérisée en ce que** les plaques (86) sont triangulaires et/ou forment un triangle équilatéral, les premiers et deuxièmes moyens de fixation (90, 94), écartés verticalement l'un de l'autre, étant disposés dans des premières et deuxièmes zones d'angle correspondantes de chacune des plaques (86) et chaque plaque (86) comportant une troisième zone d'angle qui peut être reliée de manière pivotante à une zone d'extrémité arrière (78) de chacune des tiges de liaison (62, 62').

9. Presse à balles selon la revendication 8, **caractérisée en ce que** les premiers et deuxièmes moyens de fixation (90, 94) sont alignés verticalement et sont situés à une distance de préférence identique du plan (C).
